# EUROPEAN PATENT SPECIFICATION

(11) **EP 1 594 592 B1**
(45) Date of publication and mention of the grant of the patent: **15.08.2007**
(21) Application number: 04711987.0
(22) Date of filing: 18.02.2004
(51) Int. Cl.: B01D 53/14, B01D 53/62

(54) **METHOD FOR RECOVERY OF CARBON DIOXIDE FROM A GASEOUS SOURCE**
VERFAHREN ZUR RÜCKGEWINNUNG VON KOHLENDIOXID AUS GASEN
PROCEDE DE RECUPERATION DE DIOXYDE DE CARBONE A PARTIR D'UNE SOURCE GAZEUSE

(30) Priority: 18.02.2003 DK 200300243
(43) Date of publication of application: 16.11.2005
(73) Proprietor: Union Engineering A/S, 7000 Fredericia (DK)
(72) Inventor: GELEFF, Svend, Andreas, DK-6630 Roedding (DK)
(74) Representative: Rasmussen, Preben
(86) International application number: PCT/DK2004/000108
(87) International publication number: WO 2004/073838

(56) References cited:
- WO-A-00/30738
- WO-A-03/028854
- US-A- 3 266 220

## Description

The invention relates to recovery of carbon dioxide from gaseous sources. More in particular the invention relates to a method for recovery of carbon dioxide by chemical absorption of carbon dioxide from a flue gas, followed by recovery of the carbon dioxide from the chemical absorbent.

### BACKGROUND FOR THE INVENTION

Various methods for recovery of carbon dioxide from process gases are well known.

In a typical absorber-regenerator system, recovery of carbon dioxide is performed by introduction of the gas in an absorber, where the gas contacts a lean solvent containing a chemical absorbent travelling down the absorber. The carbon dioxide is at least partially absorbed by the lean solvent and the depleted gas leaves the absorber for further processing or discharge. The solvent containing the carbon dioxide flows through a heating device to the regenerator where the carbon dioxide is released because of the high temperature, and may be recovered and optionally further purified. The stripped solvent is cooled and returned to the absorber for further absorption of carbon dioxide. The absorber-regeneration system typically allows continuous operation for recovery of carbon dioxide.

EP 0 588 175 A2 describes a method for removing carbon dioxide from combustion gases where the carbon dioxide is absorbed from the combustion gas through contact at atmospheric pressure with an aqueous amine solution in an absorber. The aqueous amine solution containing bound carbon dioxide is transferred to a regenerator where the solution is heated to release the carbon dioxide and the depleted amine solution is cooled and returned to the absorber.

WO 9521683 describes a method for removing carbon dioxide from exhaust gas from heat engines where carbon dioxide is removed from the gas by absorption of a absorbent liquid, which liquid is transferred to a stripping column where it is heated to 120-150°C to release the carbon dioxide, and returned to the absorption column via a cooler.

As the reaction of carbon dioxide and the absorbent is exothermic, a temperature rise in the absorber is encountered, which may be disadvantageous because a high temperature makes the absorption reaction less efficient.

In US patent 5,085,839 monitoring the temperature profile down through the absorber and adjusting the flow of incoming gas and aqueous amine absorbent address the problem of the temperature rise in the absorption column.

Another way to address the problem of high temperature in the absorber is the split flow process originally described in US 1,971,798. In this process a cool lean solvent is introduced in the top of the absorber and flows down through the rising gas absorbing carbon dioxide and is removed from the absorber as a warm semi rich solvent before it reaches the bottom of the absorber. At approximately the same point a cold semi lean solvent is introduced in the absorber where it flows down through the absorber to the bottom of the column where it leaves as a rich solvent. The introduction of the absorbing solvent in two streams may provide for a more optimal temperature in the absorber, which gives a better absorption of carbon dioxide with the consequence that a smaller total volume of the absorber may be necessary.

Even though the split flow process is an efficient process for recovery of carbon dioxide it inherently has some disadvantages. The fact that the semi rich solvent is removed from the absorber before it is fully saturated with carbon dioxide and the semi lean solvent is taken from the regenerator before it is fully depleted for carbon dioxide means that the full capacity of the chemical absorbent is not utilized. Consequently, larger amounts of chemical absorbent are needed than would have been necessary if the full capacity for carbon dioxide was utilized, which also means that the volume of the absorber and of the regenerator must be larger.

WO 0030738 describes a modification of the split flow process where the semi rich solvent is taken out of the absorber and mixed with semi lean solvent coming from the regenerator, and said mixture is cooled in a heat exchanger before being introduced in the absorber as the semi lean solvent.

US 5,145,658 disclose partial reclaiming of the reaction thermal energy by passing the rich solvent from the absorber through a rich-reflux reboiler and next through a rich-lean reboiler under a reduced pressure. In this way a reduction of steam requirements for regeneration of the absorbing solution of at least 10 % can be realized.

US 3,607,048 discloses regeneration of liquids used to absorb carbon dioxide from gases intended for the production of ammonia synthesis gas. The disclosed process is a process of physical absorption operated at high pressure (20-30 atm.) and low temperature (down to -80°C), and thus rather costly to carry out.

WO 03/028854 discloses a method and device for recovery of thermal energy from exothermic carbon dioxide absorption process. The disclosure is the inventor's earlier method and device, and the present invention represents a further development of this method and device.

Despite all the progress that have been disclosed there is still a need for measures to further optimise the process and reduce the energy required for recovering carbon dioxide from a gaseous source.

### DESCRIPTION OF THE INVENTION

One object of the present invention is to reduce the energy consumption for recovery of carbon dioxide.

The term reduce energy consumption has to be understood broadly. According to the present invention reduction of energy consumption means that the factual energy supplied is reduced or the amount of utilizable energy is increased. Thus for example in a power plant combustion of fuel leads to utilizable energy in form of electricity, high pressure steam, low pressure steam and hot water for warming purposes. Increasing the amount of at least one of these forms of utilizable energy is to be understood as a reduction of energy consumption.

The object according to the invention is achieved by in the absorber stage providing means for transfer of thermal energy from the solution containing the chemical absorbent to a receiving medium and further combine the absorber with at least one flash distillation apparatus and at least one strip distillation apparatus.

By providing means for removal of thermal energy from the solution containing the chemical absorbent the temperature in the absorber may be kept at a suitable low temperature to provide for a more optimal absorption of carbon dioxide from the gas. The improved absorption of carbon dioxide means that a smaller absorber volume as well as a smaller volume of the chemical absorbent is necessary in order to provide for the same removal of carbon dioxide from the gas than would have been necessary without the means for removal of thermal energy.

Further the means for transfer of thermal energy to a receiving medium may provide the chemical reaction heat from the absorption in a useful form.

The receiving medium is chemical absorbent laden with carbon dioxide from the bottom of the absorbent stage.

In another embodiment the gaseous source is flue gas, and in one preferred embodiment the gaseous source for carbon dioxide is flue gas from a power plant.

An absorber for use according to the invention is an absorber, where the gaseous source is intimately contacted with the chemical absorbent in order to ensure a high transfer of carbon dioxide from the gas to the chemical absorbent. Such absorbers are constructed as a column where the gaseous source is introduced in the lower part and rises through the column to the top where it is discharged. The chemical absorbent is introduced in the upper part of the column and streams down through the column where it contacts the rising gas. The absorber may be filled with an inert solid material in order to ensure a better contact between the gas and the chemical absorbent. An example of such inert solid material is Rashig rings made from a ceramic material. A commonly used type of absorber is a scrubber column. According to the invention it has unexpected been found that the energy consumption can be significantly reduced when the chemical absorbent is cooled during passage of the absorber and the absorber is in connection with at least one flash distillation apparatus and/or at least one strip distillation apparatus.

Consequently, in a first aspect the invention relates to a method for recovery of carbon dioxide from a gaseous source, which method comprises absorbing carbon dioxide using a chemical absorbent and subsequent recovering the carbon dioxide by release from the chemical absorbent. According to the method the chemical absorbent is cooled during the absorption by use of means for transfer of thermal energy to a receiving medium and the carbon dioxide is released from the chemical absorbent by subsequent treatment in one or more flash distillation stages and strip distillation stages.

The chemical absorbent is a liquid, which are capable of absorbing carbon dioxide from a gaseous source. Preferably the chemical absorbent is water optionally comprising one or more compounds with affinity for carbon dioxide. Preferred compounds are amines selected from the group consisting of monoethanol amine, diethanol amine, triethanol amine, methanol diethanol amine, dimethanol ethanol amine, and diiospropanol amine and piperazine. Further preferred compounds are potassium carbonates and sodium carbonates.

According to the present invention means for transfer of thermal energy to a receiving medium is provided in relation to the absorber. This has the effect that the temperature in the absorber is lowered and the absorption proceeds more efficiently. This results in that a smaller volume of the absorber as well as the chemical absorbent is necessary in order to recover the same amount of carbon dioxide compared with an absorber-regenerator plant without means for transfer of thermal energy to a receiving medium according to the invention.

Typically, the temperature in the absorber is in the range of 20 to 100°C, preferably 40 to 80°C, which provides for efficient absorption. The pressure in the absorber is typically atmospheric pressure, about 1.01 bar (1 atm) or, if desired, in the range of 0.507 to 5.07 bar (0.5 to 5 atm) in order to optimize the process.

Further because energy is removed from the absorber by means of heat transfer of thermal energy less water and/or chemical absorbent will be evaporated from the column, which water and/or chemical absorbent has to be replaced in order to keep a constant volume of the chemical absorbent.

The means for transfer of heat is preferably arranged in the hottest part of the absorbing stage.

The chemical absorbent and the receiving medium is not in direct contact, but separated by means of a wall or similar barrier. Thus, there is no mixing of the chemical absorbent and the receiving medium during transfer of thermal heat. The wall or similar barrier is preferably made from a material with good heat-conducting properties, e.g. metal.

In one embodiment the means for transfer of thermal energy are arranged in a section where in between usual inert solid material is placed.

In another embodiment means for transfer of thermal energy are arranged at different positions along the column.

In still another embodiment of the invention the absorber is parted in two or more absorbers having means for transfer of thermal heat from the chemical absorbent inserted between the absorbers.

In another embodiment the means for transfer of thermal energy is placed outside the absorber where chemical absorbent is taken out from the absorber, cooled by means of heat transfer of thermal energy and without any further mixing returned essentially to the same height of the absorber column.

In still another embodiment the absorber is parted in two or more absorbers having means for transfer of thermal heat from the chemical absorbent inserted between the absorbers.

In another embodiment the means for transfer of thermal energy is placed outside the absorber where chemical absorbent is taken out from the absorber, cooled by means of heat transfer of thermal energy and without any further mixing returned essentially to the same height of the absorber column.

Heat exchangers for use according to the present invention may in principle be of any type. It is within the skills of the person skilled in the art to select a suitable heat exchanger based on the estimated flows of absorbent, gas and receiving medium as well as the estimated amount of thermal energy to be transferred in order to provide for a more optimal temperature in the absorber, and in order to recover heat in order to improve the energy economics of the total plant.

Examples of heat exchangers for use according to the present invention are: finned tube radiators, ribbed tube radiators, shell and tube heat exchangers and plate heat exchangers.

More than one heat exchanger of more than one type may be arranged at different position along the absorber column.

In a preferred embodiment according to the invention the chemical absorbent laden with carbon dioxide from the bottom of the absorption stage is used as receiving medium for cooling chemical absorbent in the absorption stage before subsequent treatment in one or more flash distillation stages and/or strip distillation stages.

Preferably the method according to the invention comprises the following steps:
(a) the gas from a gaseous source is treated in an absorption stage with a chemical absorbent by feeding the gas at the bottom and the chemical absorbent at the top of the absorption stage, whereby carbon dioxide is washed out by counter current procedure, while the chemical absorbent is cooled at least once during the absorption stage;
(b) the treated gas is purged off at the top of the absorption stage;
(c) the chemical absorbent laden with carbon dioxide is leaving the absorber from the bottom of the absorption stage;
(d) the chemical absorbent is heated counter current with heat exchangers along the absorber tower;
(e) the laden chemical absorbent is partly regenerated by flashing it in at least one flash stage under preset pressure, and the flash gases being substantially carbon dioxide are taken off at the top of the flash stage;
(f) the residual chemical absorbent liquid from the flash stage is stripped in a stripping stage to obtain strip gas and regenerated chemical absorbent, and the strip gases being substantially carbon dioxide is taken off at the top of the stripping stage;
(g) the regenerated chemical absorbent is recycled to the absorption stage.
(h) the flash gases and the strip gases are collected and optionally stored before further treatment and/or use.

As an additional preferred feature step (d) further comprises a flash reboiling stage. Preferably the strip gases taken off the top of the stripping stage (e) is cooled by heat exchange in the flash reboiling stage. The strip gas is preferably cooled to a temperature of about 50-85°C in the flash reboiling step, whereby a good heat transfer to the flash stage is achieved. The strip gas is, if desired, further cooled after heat exchanging in the flash reboiling step, and preferably the strip gas is further cooled to a handling temperature of about 40°C.

Furthermore it is preferred that the chemical absorbent is cooled during the absorption stage at a first position between top and bottom of the absorption stage by collecting the chemical absorbent at the first position and conduct it to heat exchange with laden chemical absorbent from the bottom of the absorption stage after which the chemical absorbent is led back to the absorption stage at a position below the mentioned first position.

Moreover in a preferred embodiment the regenerated chemical absorbent from the stripping stage (e) is heat exchanged with the residual chemical absorbent from the flash stage before recycling to the absorption stage.

In order to optimise the release of carbon dioxide from the chemical absorbent, it is preferred that the preset pressure in the flash stage (d) is set to be between 0,1 and 1,5 bara.

In a second aspect the invention relates to a plant for recovery of carbon dioxide from a gaseous source. The plant comprises at least one absorber adapted for absorption of carbon dioxide in a chemical absorbent. The absorber is connected to at least one flash distillation apparatus and/or at least one strip distillation apparatus arranged for recovery of carbon dioxide by release from the chemical absorbent where the absorber comprises means for cooling the chemical absorbent during the absorption. Preferably the means for cooling comprises a heat exchanger and/or a reflux cooler.

According to the invention it is preferred that the absorber in the plant is a scrubber column.

The invention will now be described in further details with reference to a preferred embodiment and a drawing in which:

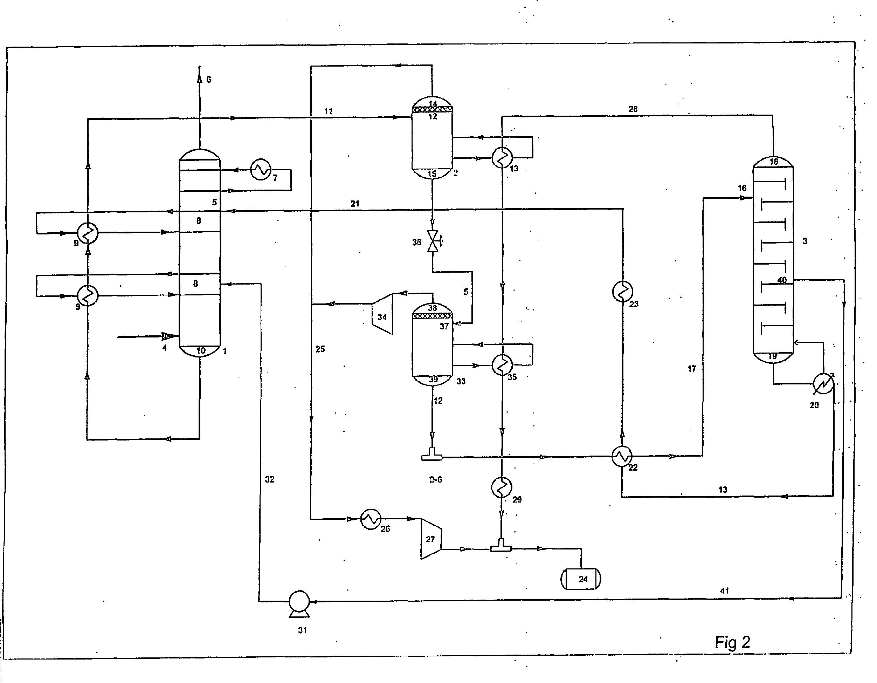

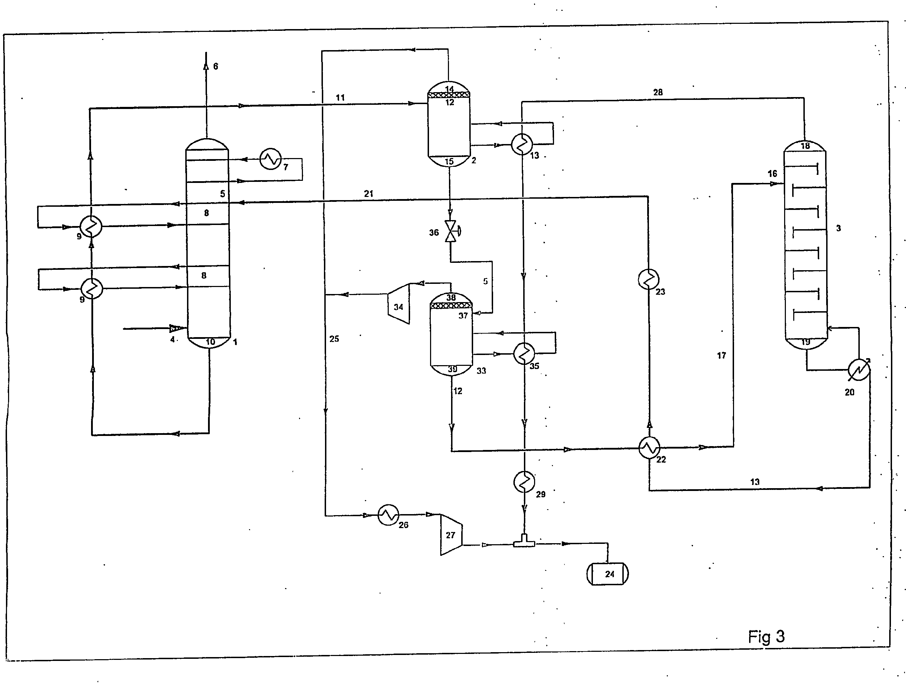

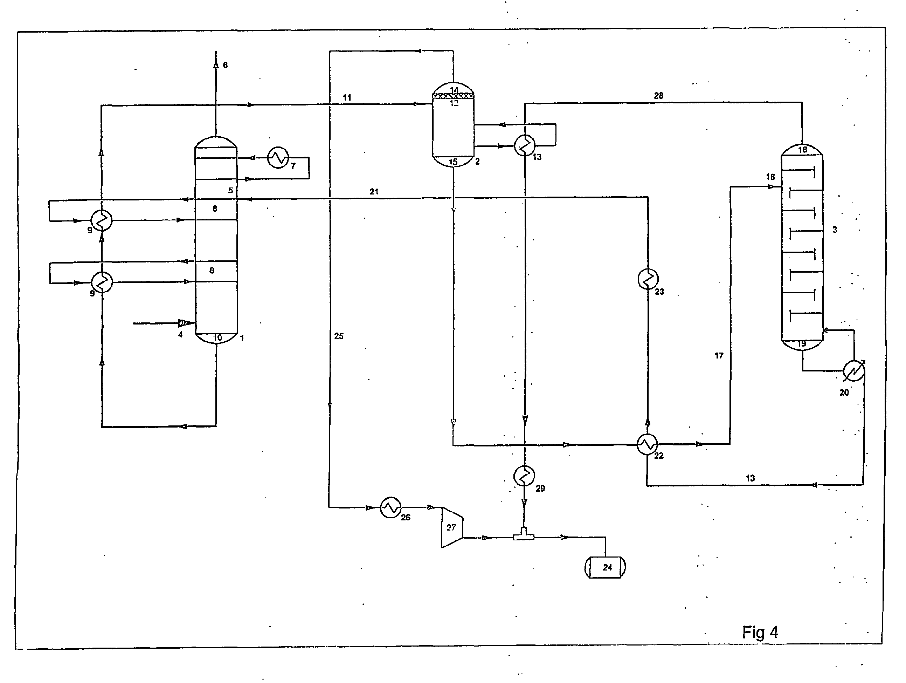

Fig 1-4 shows a plant for recovery of carbon dioxide according to the invention.

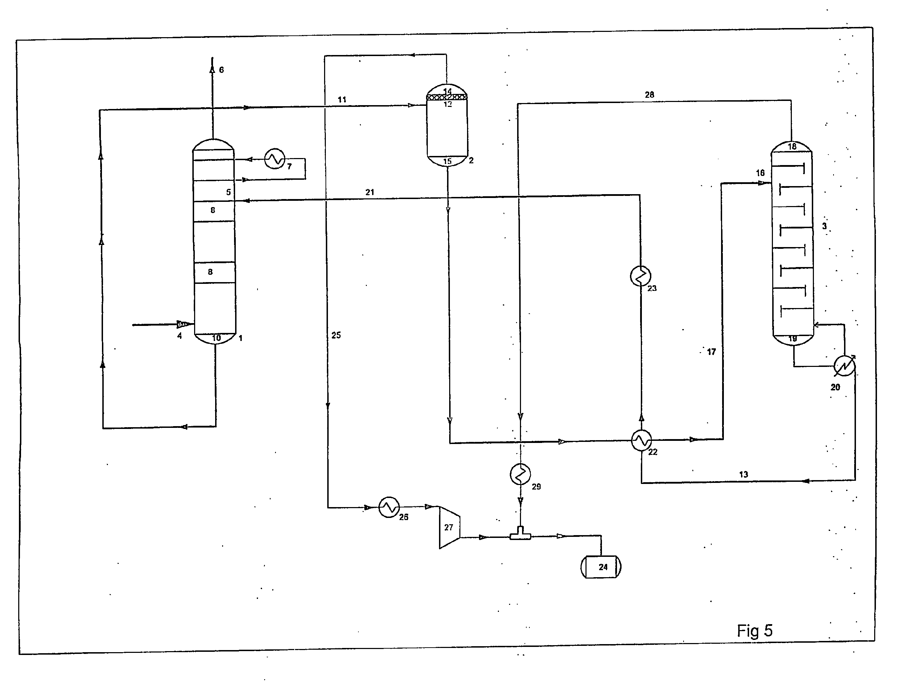

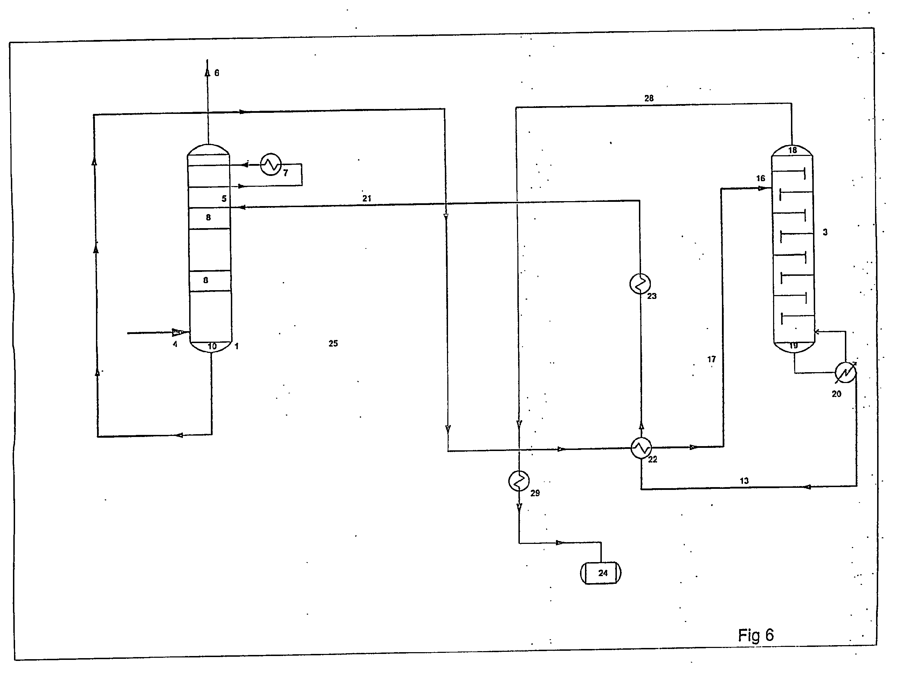

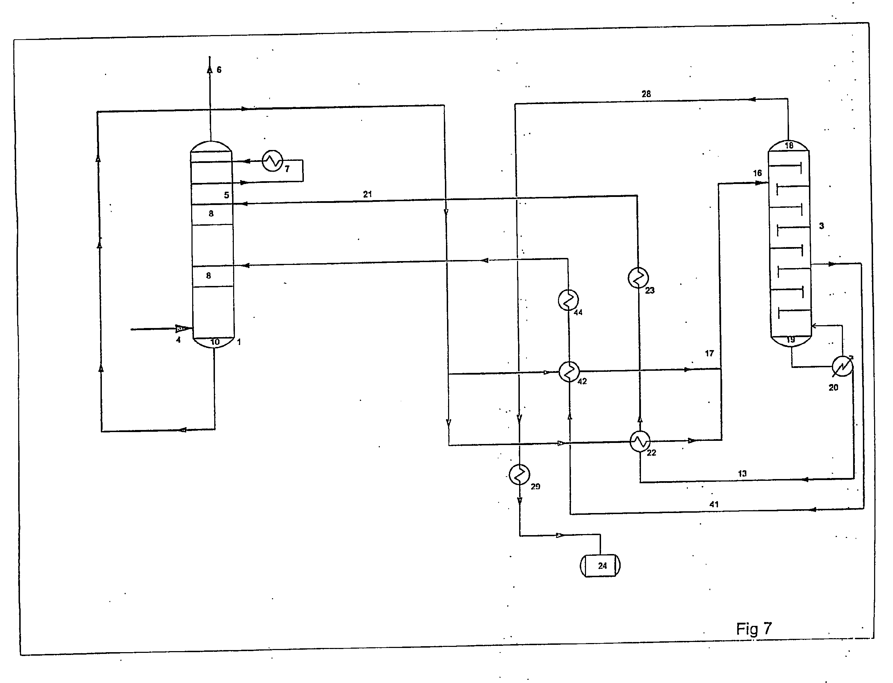

Fig 5-7 shows embodiments of known plants for recovery of carbon dioxide

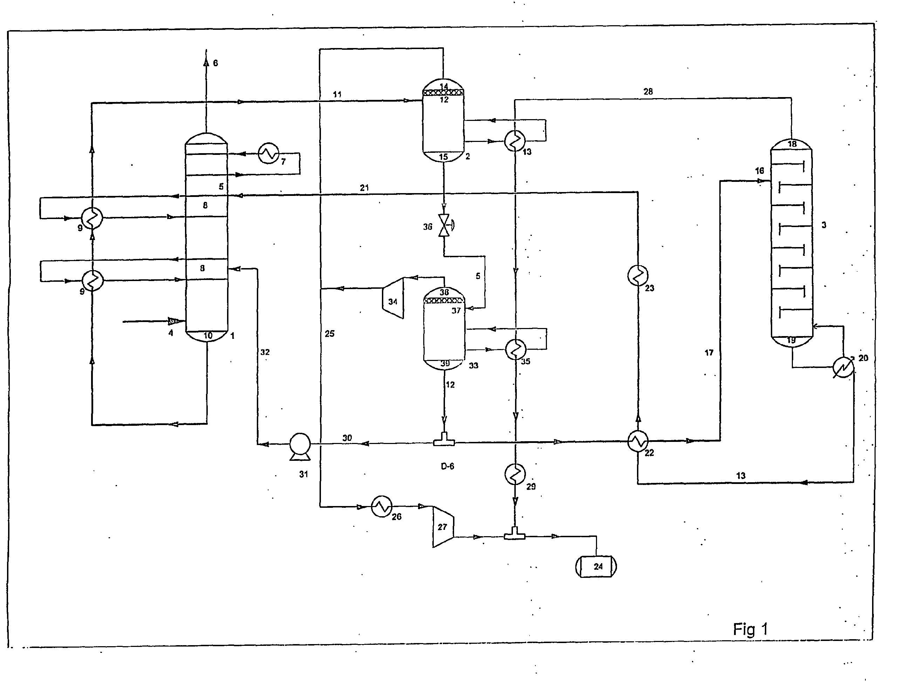

Figure 1 shows a basic circuit diagram for a method and a plant according to the invention. The outlined embodiment comprises an absorber 1 for absorption, a first vacuum flash 2 and a second vacuum flash 33 for separating chemical absorbent and carbon dioxide, and a stripper 3 for further separating chemical absorbent and carbon dioxide. According to the method, carbon dioxide containing gas from a gaseous source is led to the bottom part 4 of the absorber 1 while chemical absorbent is led to the top part 5 of the absorber 1. Consequently the carbon dioxide in the gas is washed out by counter current procedure with the chemical absorbent. The washed gas, free of carbon dioxide is removed from the top 6 of the absorber 1 after a final cooling with a reflux cooler 7. The absorber comprises several cooling sections 8 in which the chemical absorbent is cooled by means of heat exchangers 9. As cooling agent for the heat exchangers to cool the chemical absorbent in the cooling sections 8 serves laden chemical absorbent taken from the bottom 10 of the absorber.

From the bottom 10 laden chemical absorbent is led to the vacuum flash via pipelines 11 and through the heat exchangers 9.

The laden chemical absorbent is lead to the top part 12 of the first vacuum flash 2 and flashed to separate chemical absorbent and carbon dioxide. The first flash 2 is equipped with a flash reboiler 13. Carbon dioxide is taken off the top 14 of the first vacuum flash 2 and residual chemical absorbent is removed from the bottom 15 of the first vacuum flash 2. The partial flashed chemical absorbent from the first vacuum flash 2 is led to the top part 37 of the second flash 33 through a reduction valve 36 and flashed to separate the partial flashed chemical absorbent and carbon dioxide. The second flash is equipped with a secondary flash reboiler 35. Carbon dioxide is taken off the top 38 of the second vacuum flash 33 and residual second flashed absorbent is removed from the bottom 39 of the second vacuum flash 33.

The residual second flashed chemical absorbent is lead to the top part 16 of the stripper 3 via stream 17. In the stripper 3 the residual chemical absorbent is further separated into carbon dioxide and regenerated chemical absorbent. The carbon dioxide is taken off the top 18 of the stripper 3 and the regenerated chemical absorbent is taken off the bottom 19 of the stripper. The stripper is equipped with a reboiler 20 to improve the performance of the stripper 3.

The regenerated chemical absorbent is returned to the top part 5 of the absorber 1 via a stream 21. The regenerated chemical absorbent is heat exchanged with residual chemical absorbent from the second vacuum flash 33 in heat exchanger 22 and further cooled in cooler 23 before entering the absorber 1.

The carbon dioxide from the vacuum flash 2, the second vacuum flash 33 and the stripper 3 is collected in a carbon dioxide treating unit 24. The carbon dioxide from the vacuum flash 2 is collected from the top 14 of the first vacuum flash 2. The carbon dioxide from the top 38 of the second flash 33 is compressed via compressor 34 and led to pipeline 25. The carbon dioxide in pipeline 25 is let to further treatment in a carbon dioxide treating unit 24 while passing a cooler 26 and a blower 27. The carbon dioxide from the stripper 3 is collected from the top 18 of the stripper 3 and led to a carbon dioxide treating unit 24 via pipeline 28 while passing flash reboiler 13, 35 and cooler 29.

In order to further optimise the process a part or the residual chemical absorbent from the bottom 39 of the vacuum flash 33 is recycled to the absorber 1 via stream 30, pump 31 and stream 32.

### Comparative examples

In the following are given some examples of different amine absorbers based on cases of performance on different CO₂ recovery units from flue gases. As basis are used a gas composition with 16% (vol) CO₂ to the inlet of the CO₂ absorber. In the first cases are used data form existing CO₂ recovery units (Item 1-3), based on 30% (w/w) monoethanolamine solvent. In item 4 is used 30% monoethanolamine solution with a split stream configuration, in item 5-7 are used mixed amines and a vaccum configuration. Item 8 and 9 are taken from EP 106,045 A1. With a 17% (w/w) MEA and 21.8% (w/w) DEA solution on CO₂ free basis. The used results for item 10-16 are simulated on DESIGN II ver. 8.52 process simulator from WimSim inc. TX 77478, USA. Item 12-16 is according to the invention.

| Item No. | System | kW/kg CO2 | Figure No. |
|---|---|---|---|
| 1 | US4440731: Carboneco, 30 % MEA | 1,231 | 6 |
| 2 | US4440731:European drink, 30% MEA | 1,143 | 6 |
| 3 | *http://www.netl.doe.gov/publications/proceeding US4440731: s/01/carbon_seq/2b3.pdf, Page 9 | 1,166 | 6 |
| 4 | 30% MEA with split stream | 1,039 | 7 |
| 5 | EP 1061045 A1- 30 MEA | 1,202 | 5 |
| 6 | EP 1061045 A1- mixed amines | 0,938 | 5 |
| 7 | EP 1061045 A1- mixed amines | 0,733 | 5 |
| 8 | EP0588175A2 example 2,fig 1,2&3), 30% AMP (2amino-2methykl-1propanol) in H2O | 0,923 | - |
| 9 | EP0588175A2 example 2, 30% AMP (2amino-2methykl-1 propanol) in H2O | 0,730 | 6 |
| 10 | Union mix amin standard (16% MEA + 21%DEA) | 0,866 | 6 |
| 11 | Union mix amin standard (16% MEA + 21%DEA) | 0,826 | 5 |
| 12 | Union mix amin with Heat Recovery and vacuum strip one stage | 0,742 | 4 |
| 13 | Union mix amin with heat recovery and vacuum strip one stage and 20%split from stripper | 0,726 | 2 |
| ¹⁴ | Union mix amin with heat recovery and vacuum strip one stage and 43%split from stripper | 0,723 | 2 |
| ¹⁵ | Union mix amin with heat recovery and vacuum strip one stage and one vacuum stripper | 0,718 | 3 |
| 16 | Union mix amin with heat recovery and 34%split from vacuum flash THIS INVENTION | 0,650 | 1 |

| | | | |
|---|---|---|---|
| * Canadian Society of Chemical Engineers annual meeting October 4-6, 1999 Saskatoon, Saskatchewan, Canada by Dan G. Chapel, Carl L. Mariz and John Ernest | | | |

According to the invention it is possible to achieve a steam consumption per kilogram recovered carbon dioxide as low as 1.1 to 1.2 kilogram steam. This has to be compared to the approximate 1.8 kilogram steam per recovered kilogram carbon dioxide achieved by the known methods and plants.

The above-described example only illustrates one embodiment according to the invention. The diagram has been simplified in order to clarify the invention and a plant according to the invention may comprise more than one absorber, flash or stripper. The plant also comprises additional equipments like pumps, valves or filters, which all are well within the skill of the art and which have been excluded from the diagram for the sake of simplicity.

## Claims

1. A method for recovery of carbon dioxide from a gaseous source comprising absorbing carbon dioxide using a chemical absorbent and recovering the carbon dioxide by release from the chemical absorbent where the chemical absorbent is cooled during the absorption by means of one or more heat exchange stages and the carbon dioxide is released from the chemical absorbent by subsequent treatment in one or more flash distillation stages and/or strip distillation stages wherein laden chemical absorbent from the bottom of the absorption stage before said subsequent treatment is used as receiving medium for cooling the chemical absorbent in said one or more heat exchange stages.

2. A method according to claims 1, which method comprises the following steps
(a) treating gas from said gaseous source in an absorption stage with a chemical absorbent by feeding the gas at the bottom and the chemical absorbent at the top of the absorption stage, carbon dioxide being washed out by counter current procedure, and the chemical absorbent being cooled at least once during the absorption stage;
(b) taking off the treated gas at the top of the absorption stage;
(c) taking off the chemical absorbent laden with carbon dioxide at the bottom of the absorption stage;
(d) regenerating the laden chemical absorbent by flashing it in at least one flash stage under preset pressure, the flash gases being taken off at the top of the flash stage;
(e) stripping the residual chemical absorbent liquid from the flash stage in a stripping stage to obtain strip gas and regenerated chemical absorbent, the strip gases being taken off the top of the stripping stage;
(f) recycling the regenerated chemical absorbent liquid to the absorption stage.
(g) collecting the flash gases and the strip gases.

3. A method according to claim 2 wherein step (d) further comprises a flash reboiling stage.

4. A method according to claim 2 and 3 wherein the strip gases taken off the top of the stripping stage (e) is cooled by heat exchange in said flash reboiling stage.

5. A method according to claim 2 wherein the chemical absorbent is cooled during the absorption stage at a first position between top and bottom of the absorption stage by collecting the chemical absorbent at said first position and conduct it to heat exchange with laden chemical absorbent from the bottom of the absorption stage after which the chemical absorbent is led back to the absorption stage at a position below said first position.

6. A method according to claim 2 wherein the regenerated chemical absorbent from the stripping stage (e) before recycling to the absorption stage is heat exchanged with the residual chemical absorbent from the flash stage.

7. A method according to claim 2 wherein the strip gas is further cooled after heat exchanging in the flash reboiling step.

8. A method according to claim 7 wherein the strip gas is cooled to a temperature of about 50-85°C in the flash reboiling step.

9. A method according to claim 7 wherein the strip gas is further cooled to a temperature of about 40°C.

10. A method according to claim 2 wherein the preset pressure in the flash stage (d) is between 0.1 and 1.5 bara.

11. A method according to claim 2 wherein at least a part of the residual chemical absorbent from the flash stage is recycled to the absorption stage.

12. A method according to according to anyone of the preceding claims wherein the chemical absorbent is based on water comprising one or more amines selected from the group consisting of monoethanol amine, diethanol amine, triethanol amine, methanol diethanol amine, dimethanol ethanol amine, and diiospropanol amine, piperazine and potassium carbonate.

13. A plant for recovery of carbon dioxide from a gaseous source comprising at least one absorber for absorption of carbon dioxide in a chemical absorbent, connected to at least one flash distillation apparatus and/or at least one strip distillation apparatus arranged for recovering of carbon dioxide by release from the chemical absorbent said at least one absorber comprises means for cooling chemical absorbent during the absorption wherein said means for cooling is arranged to use laden chemical absorbent taken from the bottom of the absorber as cooling agent.

14. A plant according to claim 13 wherein the absorber is a scrubber column.

15. A plant according to claim 14 wherein the means for cooling comprises a heat exchanger.

## Patentansprüche

1. Verfahren zur Rückgewinnung von Kohlendioxid aus einer gasförmigen Quelle, umfassend ein Absorbieren von Kohlendioxid unter Verwendung eines chemischen Absorptionsmittels und eine Rückgewinnung des Kohlendioxids durch Freigabe von dem chemischen Absorptionsmittel, wobei das chemische Absorptionsmittel während der Absorption mittels einer oder mehrerer Wärmeaustauschstufen abgekühlt wird, und das Kohlendioxid vom chemischen Absorptionsmittel durch anschließende Behandlung in einer oder mehrerer Flashdestillationsstufen und/oder Strippen-Destillationsstufen freigegeben wird, wobei vor der genannten anschließenden Behandlung beladenes Absorptionsmittel aus dem Boden der in der Absorptionsstufe verwendeten Anordnung als Empfangsmedium zum Abkühlen des chemischen Absorptionsmittels in der genannten einen oder in den genannten mehreren Wärmeaustauschstufen verwendet wird.

2. Verfahren nach Anspruch 1, welches die folgenden Schritte umfasst:
(a) Behandlung von Gas aus der genannten gasförmigen Quelle in einer Absorptionsstufe mit einem chemischen Absorptionsmittel durch Speisung des Gases unten an der in der Absorptionsstufe verwendeten Anordnung und Speisung des chemischen Absorptionsmittels oben an der in der Absorptionsstufe verwendeten Anordnung, wobei Kohlendioxid mittels eines Gegenstromverfahrens ausgewaschen wird, und das chemische Absorptionsmittel mindestens einmal während der Absorptionsstufe abgekühlt wird;
(b) Entfernen des behandelten Gases oben an der in der Absorptionsstufe verwendeten Anordnung;
(c) Entfernen des mit Kohlendioxid geladenen chemischen Absorptionsmittels unten an der in der Absorptionsstufe verwendeten Anordnung;
(d) Regenerieren des geladenen chemischen Absorptionsmittels durch Flashen in mindestens einer Flashstufe unter vorgegebenem Druck, wobei die Flashgase oben an der in der Flashstufe verwendeten Anordnung entfernt werden;
(e) Strippen der verbleibenden chemischen Absorptionsflüssigkeit aus der Flashstufe in eine Strippen-Stufe zum Erhalten von Strippen-Gas und regeneriertem chemischem Absorptionsmittel, wobei die Strippen-Gase von oben der in der Strippen-Stufe verwendeten Anordnung entfernt werden;
(f) Recycling der regenerierten chemischen Absorptionsflüssigkeit zur Absorptionsstufe;
(g) Auffangen der Flashgase und der Strippen-Gase.

3. Verfahren nach Anspruch 2, wobei der Schritt (d) ferner eine Flash-Wiederverdampfungsstufe umfasst.

4. Verfahren nach den Ansprüchen 2 und 3, bei welchem die von oben der in der Strippen-Stufe (e) verwendeten Anordnung entfernten Strippen-Gase durch Wärmeaustausch in der genannten Flash-Wiederverdampfungsstufe abgekühlt werden.

5. Verfahren nach Anspruch 2, bei welchem das chemische Absorptionsmittel während der Absorptionsstufe in einer ersten Position zwischen Kopf und Boden der in der Absorptionsstufe verwendeten Anordnung abgekühlt wird, indem das chemische Absorptionsmittel in der genannten ersten Position aufgefangen und zum Wärmeaustausch mit beladenem chemischem Absorptionsmittel aus dem Boden der in der Absorptionsstufe verwendeten Anordnung geleitet wird, worauf das chemische Absorptionsmittel zur in der Absorptionsstufe verwendeten Anordnung in einer Position unterhalb der genannten ersten Position rückgeleitet wird.

6. Verfahren nach Anspruch 2, bei welchem das regenerierte chemische Absorptionsmittel aus der Strippen-Stufe (e) vor Recycling zur Absorptionsstufe mit dem verbleibenden chemischen Absorptionsmittel aus der Flash-Stufe wärmegetauscht wird.

7. Verfahren nach Anspruch 2, bei welchem das Strippen-Gas nach dem Wärmeaustausch im Flash-Wiederverdampfungsschritt weiter abgekühlt wird.

8. Verfahren nach Anspruch 7, bei welchem das Strippen-Gas im Flash-Wiederverdampfungsschritt auf eine Temperatur von etwa 50-85 C° abgekühlt wird.

9. Verfahren nach Anspruch 7, bei welchem das Strippen-Gas auf eine Temperatur von etwa 40 C° weiter abgekühlt wird.

10. Verfahren nach Anspruch 2, bei welchem der vorgegebene Druck in der Flash-Stufe (d) 0,1 bis 1,5 bar beträgt.

11. Verfahren nach Anspruch 2, bei welchem mindestens ein Teil des verbleibenden chemischen Absorptionsmittels aus der Flash-Stufe zur Absorptionsstufe recycelt wird.

12. Verfahren nach einem der vorgehenden Ansprüche, bei welchem das chemische Absorptionsmittel auf Wasser umfassend ein oder mehrere Amine ausgewählt von der Gruppe bestehend aus Monoethanolamin, Diethanolamin, Triethanolamin, Methanoldiethanolamin, Dimethanolethanolamin und Diisopropanolamin, Piperazin und Kaliumcarbonat basiert.

13. Anlage zur Rückgewinnung von Kohlendioxid aus einer gasförmigen Quelle, umfassend mindestens einen Absorber zum Absorbieren von Kohlendioxid in einem chemischen Absorptionsmittel, welcher an mindestens ein Flashdestillationsgerät und/oder mindestens ein Strippen-Destillationsgerät angeschlossen ist, welches zur Rückgewinnung von Kohlendioxid durch Freigabe vom chemischen Absorptionsmittel vorgesehen sind, wobei der genannte mindestens eine Absorber ein Mittel zum Abkühlen chemischen Absorptionsmittels während der Absorption umfasst, wobei das genannte Kühlmittel dazu vorgesehen ist, beladenes, chemisches Absorptionsmittel als Kühlmittel zu verwenden, welches chemisches Absorptionsmittel aus dem Boden des Absorbers genommen ist.

14. Anlage nach Anspruch 13, bei welcher der Absorber einen Berieselungsturm darstellt.

15. Anlage nach Anspruch 14, bei welcher das Kühlmittel einen Wärmetauscher umfasst.

## Revendications

1. Procédé de récupération de dioxyde de carbone à partir d'une source gazeuse, comprenant l'absorption de dioxyde de carbone en utilisant un absorbant chimique et la récupération du dioxyde de carbone grâce à sa libération de l'absorbant chimique, dans lequel l'absorbant chimique est refroidi pendant l'absorption au moyen d'une ou de plusieurs étapes d'échange de chaleur, et le dioxyde de carbone est libéré de l'absorbant chimique par le traitement subséquent dans une ou plusieurs étapes de distillation flash et/ou de distillation par stripping, l'absorbant chimique chargé issu de la partie inférieure de l'arrangement employé dans l'étape d'absorption avant ledit traitement subséquent étant utilisé en tant que milieu de réception pour le refroidissement de l'absorbant chimique dans ladite étape ou lesdites étapes d'échange de chaleur.

2. Procédé selon la revendication 1, ledit procédé comprenant les étapes suivantes
(a) le traitement de gaz issu de ladite source gazeuse dans une étape d'absorption avec un absorbant chimique en fournissant le gaz à la partie inférieure de l'arrangement employé dans l'étape d'absorption et en fournissant l'absorbant chimique à la partie supérieure de l'arrangement employé dans l'étape d'absorption, le dioxyde de carbone étant enlevé par lavage par un procédé à contre-courant, et l'absorbant chimique étant refroidi au moins une fois pendant l'étape d'absorption ;
(b) l'évacuation du gaz traité à la partie supérieure de l'arrangement employé dans l'étape d'absorption ;
(c) l'enlèvement de l'absorbant chimique chargé de dioxyde de carbone à la partie inférieure de l'arrangement employé dans l'étape d'absorption ;
(d) la régénération de l'absorbant chimique chargé par un traitement flash dans au moins une étape flash sous une pression prédéterminée, les gaz flash étant évacués à la partie supérieure de l'arrangement employé dans l'étape flash ;
(e) le stripping du liquide d'absorbant chimique résiduel issu de l'étape flash dans une étape de stripping de manière à obtenir un gaz de stripping et un absorbant chimique régénéré, les gaz de stripping étant évacués à la partie supérieure de l'arrangement employé dans l'étape de stripping ;
(f) le recyclage du liquide d'absorbant chimique régénéré vers l'étape d'absorption ;
(g) la récupération des gaz flash et des gaz de stripping.

3. Procédé selon la revendication 2, dans lequel l'étape (d) comprend également une étape de flash-rebouillage.

4. Procédé selon les revendications 2 et 3, dans lequel les gaz de stripping évacués à la partie supérieure de l'arrangement employé dans l'étape de stripping (e) sont refroidis au moyen d'échange de chaleur dans ladite étape de flash-rebouillage.

5. Procédé selon la revendication 2, dans lequel l'absorbant chimique est refroidi pendant l'étape d'absorption à une première position entre la partie supérieure et la partie inférieure de l'arrangement employé dans l'étape d'absorption en récupérant l'absorbant chimique à ladite première position et en le menant à l'échange de chaleur avec l'absorbant chimique chargé issu de la partie inférieure de l'arrangement employé dans l'étape d'absorption, ensuite l'absorbant chimique est ramené vers l'arrangement employé dans l'étape d'absorption à un position en dessous de ladite première position.

6. Procédé selon la revendication 2, dans lequel l'absorbant chimique régénéré issu de l'étape de stripping (e), avant son recyclage vers l'étape d'absorption, est mené à l'échange de chaleur avec l'absorbant chimique résiduel issu de l'étape flash.

7. Procédé selon la revendication 2, dans lequel le gaz de stripping est en outre refroidi après l'échange de chaleur dans l'étape de flash-rebouillage.

8. Procédé selon la revendication 7, dans lequel le gaz de stripping est refroidi à une température de l'ordre de 50 à 85°C dans l'étape de flash-rebouillage.

9. Procédé selon la revendication 7, dans lequel le gaz de stripping est en outre refroidi à une température de l'ordre de 40°C.

10. Procédé selon la revendication 2, dans lequel la pression prédéterminée dans l'étape flash (d) est comprise entre 0,1 et 1,5 bars.

11. Procédé selon la revendication 2, dans lequel au moins une partie de l'absorbant chimique résiduel issu de l'étape flash est recyclée vers l'étape d'absorption.

12. Procédé selon l'une quelconque des revendications précédentes, dans lequel l'absorbant chimique est à base d'eau comprenant une ou plusieurs amines choisies parmi le groupe constitué de la monoéthanolamine, de la diéthanolamine, de la triéthanolamine, de la méthanoldiéthanolamine, de la diméthanoléthanolamine, ainsi que de la diisopropanolamine, de la pipérazine et du carbonate de potassium.

13. Installation pour la récupération de dioxyde de carbone à partir d'une source gazeuse comprenant au moins un dispositif d'absorption pour l'absorption de dioxyde de carbone dans un absorbant chimique, relié à au moins un appareil de distillation flash et/ou à au moins un appareil de distillation par stripping arrangé pour récupérer le dioxyde de carbone grâce à sa libération de l'absorbant chimique, ledit au moins un dispositif d'absorption comprenant un moyen pour refroidir l'absorbant chimique pendant l'absorption, ledit moyen de refroidissement étant arrangé de manière à utiliser de l'absorbant chimique chargé venant de la partie inférieure du dispositif d'absorption en tant que moyen de refroidissement.

14. Installation selon la revendication 13, dans laquelle le dispositif d'absorption est une colonne de lavage.

15. Installation selon la revendication 14, dans laquelle le moyen de refroidissement comprend un échangeur de chaleur.
